# EUROPÄISCHE PATENTANMELDUNG

(11) **EP 4 841 535 A1**
(43) Veröffentlichungstag der Anmeldung: **18.11.2026**
(21) Anmeldenummer: 26171888.6
(22) Anmeldetag: 13.04.2026
(51) Int. Cl.: G06Q 10/06, G06Q 10/04, G06Q 10/20, G06Q 50/04

(54) **OPTIMIERUNG VON WARTUNGS- UND/ODER BESTÜCKUNGSPLANUNG IN EINER MASCHINENLINIE**

(30) Priorität: 14.05.2025 DE 102025118533
(71) Anmelder: Krones AG, 93073 Neutraubling (DE)
(72) Erfinder: Sladky, Roland, 93073 Neutraubling (DE); Olenberg, Philipp, 93073 Neutraubling (DE); Obermeier, Dr. Martin, 93073 Neutraubling (DE); Jatschka, Dr. Thomas, 93073 Neutraubling (DE); Buchfelder, Dominik, 93073 Neutraubling (DE)
(74) Vertreter: Grünecker Patent- und Rechtsanwälte PartG mbB

(57) **Zusammenfassung**

Die Erfindung betrifft ein computerimplementiertes Verfahren und ein System zur Optimierung von Wartungs- und/oder Bestückungsplanung in einer Maschinenlinie, insbesondere einer Maschinenlinie zum Abfüllen und Verpacken von Lebensmitteln und/oder Getränken. Dabei werden über eine Eingabeschnittstelle Planungsdaten für Wartung und/oder Bestückung der Maschinenlinie, Produktionsplanungsdaten, und eine oder mehrerer Präferenzen eingegeben. Ein formales Systemmodell beschreibt Wirkzusammenhänge von Daten-, Energie-, und/oder Materialströmen in der Maschinenlinie. Das formale Systemmodell wird zusammen mit den Planungsdaten für Wartung und/oder Bestückung, den Produktionsplanungsdaten und der einen oder der mehreren Präferenzen an ein Künstliches-Intelligenz- (Kl-) System übergeben. Das KI-System spannt einen Lösungsraum mit einer Vielzahl von möglichen Wartungs- und/oder Bestückungsoptionen auf. Der Lösungsraum wird nach einer optimierten Wartungs- und/oder Bestückungsplanung basierend auf der einen oder den mehreren Präferenzen durchsucht und ein optimaler Plan für die Wartung und/oder Bestückung der Maschinenlinie wird ausgegeben.

## Beschreibung

Die Erfindung betrifft ein computerimplementiertes Verfahren und System zum Optimieren von Wartungs- und/oder Bestückungsplanung in einer Maschinenlinie, insbesondere einer Maschinenlinie zum Abfüllen und Verpacken von Lebensmitteln und/oder Getränken.

In der Abfüll- und Verpackungsindustrie werden Produktionsanlagen zunehmend komplexer, modulare Maschinenkonzepte sind weit verbreitet, und die Anforderungen an Effizienz, Verfügbarkeit und Produktqualität steigen kontinuierlich. Um diesen Herausforderungen zu begegnen, setzen Anlagenbetreiber vermehrt auf Softwarelösungen zur Planung und Steuerung ihrer Produktionslinien. Derzeit existieren bereits verschiedene Softwarelösungen, die vor allem zur kundenspezifischen Planung einzelner Anlagenkomponenten eingesetzt werden. Diese Lösungen sind in der Regel individuell auf die jeweilige Produktionsumgebung zugeschnitten und erfordern umfassendes Expertenwissen bei den Betreibern solcher Anlagen.

Ein Problem dieser Vorgehensweise liegt darin, dass wesentliche Planungsprozesse, wie beispielsweise die Beschickungsplanung sowie die Wartungsplanung bislang überwiegend manuell und auf Basis des Erfahrungswissens der Planer bei den Betreibern der Maschinenlinien durchgeführt werden. Dabei müssen unter anderem Verbrauchs- und Hilfsstoffe wie Etiketten, Verschlüsse, Preforms, Schmierstoffe oder Reinigungsmittel rechtzeitig und bedarfsgerecht bereitgestellt werden, um einen störungsfreien Betrieb der Anlage zu gewährleisten. Gleichzeitig müssen Wartungsmaßnahmen sinnvoll terminiert werden, um unnötige Stillstände zu vermeiden und die Lebensdauer der Maschinen zu maximieren.

Die Qualität dieser Planungen ist stark abhängig von der Erfahrung, Verfügbarkeit und Qualifikation des Personals. In der Praxis führt dies häufig zu suboptimalen Ergebnissen. Ungeplante Stillstände aufgrund fehlender Betriebsmittel, erhöhter Ausschuss durch unzureichende Versorgung oder verspätete Wartungen und daraus resultierende Maschinenschäden sind keine Seltenheit. Diese Effekte wirken sich direkt negativ auf die Gesamtanlageneffektivität (OEE), die Produktqualität sowie die Betriebskosten aus.

Zwar existieren bereits erste maschinenbezogene Einzelanwendungen zur zustandsbasierten Versorgung und Wartung, wie beispielsweise Etikettenstandsüberwachungen bei Etikettiermaschinen oder Füllstandsüberwachung von Preform-Silos bei Streckblasmaschinen. Auch Condition-Monitoring-Funktionen einzelner Maschinen, wie Füller oder Etikettierer kommen zum Einsatz. Diese Lösungen sind jedoch punktuell und isoliert. Eine linienübergreifende Funktionalität, die auf dem umfassenden Domänenwissen des Herstellers basiert und dieses gezielt zur Optimierung der gesamten Produktionslinie als digitales Serviceprodukt nutzbar macht, ist derzeit nicht verfügbar.

Insbesondere fehlt eine einheitliche digitale Plattform, die nicht nur den Zustand einzelner Maschinen überwacht, sondern diese Informationen zusammenführt, interpretiert und daraus vorausschauende Planungs- und Handlungsempfehlungen für die Beschickung und Wartung ganzer Maschinenlinien ableitet.

Es besteht daher Bedarf für verbesserte Verfahren und Systeme zur Optimierung von Wartungs- und/oder Bestückungsplanung in einer Maschinenlinie.

Die Aufgabe wird erfindungsgemäß durch ein computerimplementiertes Verfahren gemäß Anspruch 1, ein System gemäß Anspruch 8 und ein computerlesbares Speichermedium gemäß Anspruch 10 gelöst. Ausführungsformen und Weiterbildungen sind in den Unteransprüchen erfasst.

Eine Ausführungsform betrifft ein computerimplementiertes Verfahren zur Optimierung von Wartungs- und/oder Bestückungsplanung in einer Maschinenlinie, insbesondere einer Maschinenlinie zum Abfüllen und Verpacken von Lebensmitteln und/oder Getränken. Das Verfahren umfasst das Bereitstellen einer Eingabeschnittstelle. Diese Eingabeschnittstelle kann beispielsweise eine graphische Benutzeroberfläche mit einer speziell dafür angepassten Eingabemaske sein. Der Nutzer kann folgende Daten darüber eingeben: Planungsdaten für Wartung und/oder Bestückung der Maschinenlinie, Produktionsplanungsdaten, und eine oder mehrerer Präferenzen. Präferenzen sind durch einen Benutzer festgelegte Randbedingungen in der Planung für Wartung und/oder Bestückung. Danach wird eines formalen Systemmodell für die Maschinenlinie erfasst. Das formale Systemmodell beschreibt Wirkzusammenhänge von Daten-, Energie-, und/oder Materialströmen in der Maschinenlinie. Beispielsweise kann dieses Systemmodell aus den technischen Entwicklungsdaten und Simulationsdaten der Anlage abgeleitet werden. Das formale Systemmodell wird dann zusammen mit den Planungsdaten für Wartung und/oder Bestückung, den Produktionsplanungsdaten und der einen oder der mehreren Präferenzen an ein Künstliches-Intelligenz- (KI-) System übergeben. Das KI-System spannt daraufhin einen Lösungsraum mit einer Vielzahl von möglichen Wartungs- und/oder Bestückungsoptionen auf. Beispielsweise können alle physikalisch möglichen Planungsabläufe in dem Lösungsraum enthalten sein. Der Lösungsraum wird dann nach einer optimierten Wartungs- und/oder Bestückungsplanung basierend auf der einen oder den mehreren Präferenzen durchsucht und ein optimaler Plan für die Wartung und/oder Bestückung der Maschinenlinie wird ausgegeben. Beispielsweise kann der ausgegebene Plan in Steuerparameter übersetzt oder ausgegeben werden, die zur Steuerung der Maschinenlinie angepasst sind. Diese ausgegebenen Steuerparameter können dann direkt in der Maschinensteuerung implementiert werden.

Weitere Ausführungsformen umfassen ein System zum Optimieren von Wartungs- und/oder Bestückungsplanung und ein entsprechendes computerlesbares Speichermedium.

Beispielhafte Aspekte der Erfindung sind in den Zeichnungen dargestellt. Es zeigen:
**Figur 1**: eine beispielhafte schematische Darstellung des Systems zum Optimieren von Wartungs- und/oder Bestückungsplanung in einer Maschinenlinie;
**Figur 2**: eine beispielhafte Anlagenkonfiguration für PET-Behälter und Klebegebinde;
**Figur 3**: eine beispielhafte Anlagenkonfiguration für PET-Behälter und Schrumpfpacker;
**Figur 4**: eine beispielhafte Anlagenkonfiguration für Dosen oder Glasflaschen; und
**Figur 5**: eine beispielhafte Anlagenkonfiguration für Dosen.

Ausführungsformen der Erfindung betreffen verschiedene Strategien zur Beschickungsplanung und/oder zur Wartungsplanung, je nach Anlagenkonfiguration und Präferenz eines Anlagenbetreibers für das Anlagenverhalten von der Anlage bzw. Maschinenlinie. Diese Planung wird gemäß Ausführungsformen in Form eines Expertensystems für die Gesamtlinie umgesetzt, statt wie im Stand der Technik üblich, manuell solche Planungen zu erstellen. Das Ziel des Expertensystems ist es, einen Produktionsplan durch einen Plan für Beschickungsaufträge und/oder einen Plan für Wartungspläne zu erweitern, bzw. einen übergreifend optimalen Produktions- und Wartungs- und/oder Beschickungsplan zu erstellen.

Die Erstellung des Produktionsplans obliegt diverser Restriktionen abgeleitet aus Wirkzusammenhängen von Daten-, Energie- und Materialströmen, sowie die Abhängigkeiten zu und zwischen Betriebszuständen, Geometrien, Materialien, Prozessen, Funktionen, Kundenanforderungen und Optimierungszielen. Strukturelle Wirkzusammenhänge können beispielsweise in Form von Produktwechselmatrizen formalisiert werden. Diese Restriktionen müssen auch in der Beschickungsplanung und der Wartungsplanung weiterhin eingehalten werden. Weiter müssen bei der Beschickungs- und/oder Wartungsplanung zusätzlich noch zeitliche Restriktionen berücksichtigt werden, beispielsweise in welchem Zeitraum Beschickungen und/oder Wartungen durchgeführt werden müssen, sowie Abhängigkeiten zu zuvor erfolgenden Beschickungen oder Wartungen.

Für den Betreiber einer solchen Anlage kann es nützlich sein, wenn er für seine Anlagen/Maschinenlinien bzw. beliebige Systemverbünde (z.B. Logistiksysteme + BPE-Anlage) die Optimierungspotentiale in der Beschickungsplanung und/oder in der Wartungsplanung für einen definierten Produktionszeitraum (z.B. 1-5 Tage, 1-4 Wochen, 1-2 Monate, etc.) durch einen flexibel nutzbaren Service optimal je nach kundenspezifischen Präferenzen aufgezeigt bekommt und in der Produktion umsetzen kann. Stillstandszeiten können sich hierbei aus Produktwechselzeiten oder dedizierten Wartungs- und Beschickungszeiträumen, welche für die Produktionsplanung explizit gesperrt wurden, ergeben. Dabei ist zu beachten, dass nicht immer genügend lange Stillstandszeiten im Produktionsplan vorliegen, in denen die notwendigen Beschickungsaufträge oder Wartungsaufträge eingeplant werden können, sondern diese auch während der laufenden Produktion notwendig sind. Die Stillstandszeiten können sich auch aus Produktwechselzeiten oder dedizierten Wartungszeiträumen ergeben, welche für die Produktionsplanung explizit gesperrt wurden.

Statt für jede neue oder Anlage das Optimierungspotential unter der Berücksichtigung von unterschiedlichen Präferenzen durch explizites kundenanfragespezifisches Programmieren zu erstellen, ist es mittels den hierin beschriebenen Ausführungsformen möglich, automatisch ein formales Systemmodell der Maschinenanlage zu erzeugen, das auf der Basis von formalen Produktwechselmatrizen und den zur Produktion der Produkte nötigen zu beschickenden Hilfs- und Verbrauchsmaterialien (Folien, Kartonagen, Deckel, Etiketten, Leim etc.) inkl. deren planungsrelevanten Daten (Transportzeiten, Lagerorte, verfügbare transportierbare Einheiten, Aufnahmemöglichkeiten der Einheiten durch Transportmittel und durch Abnahmestationen in der Maschine/Anlage) abgeleitet wird.

Des Weiteren kann, sofern vorhanden, die Beschickungsmöglichkeit durch AGVs (Automated Guided Vehicles) zur automatischen Beschickung verschiedener Materialien vorgegeben werden. Dazu wird je AGV dessen Funktionsumfang zur Beschickung und die möglichen Hallenrouten und deren Einschränkungen (z.B. Nur Einbahnbetrieb, maximale Geschwindigkeiten etc.) in formaler Form vorgegeben.

Für die Wartungsplanung und/oder Beschickungsplanung kann das formale Systemmodell der Maschinenlinie auf Basis der oben genannten Restriktionen für die Produktions- sowie Wartungsplanung abgeleitet werden.

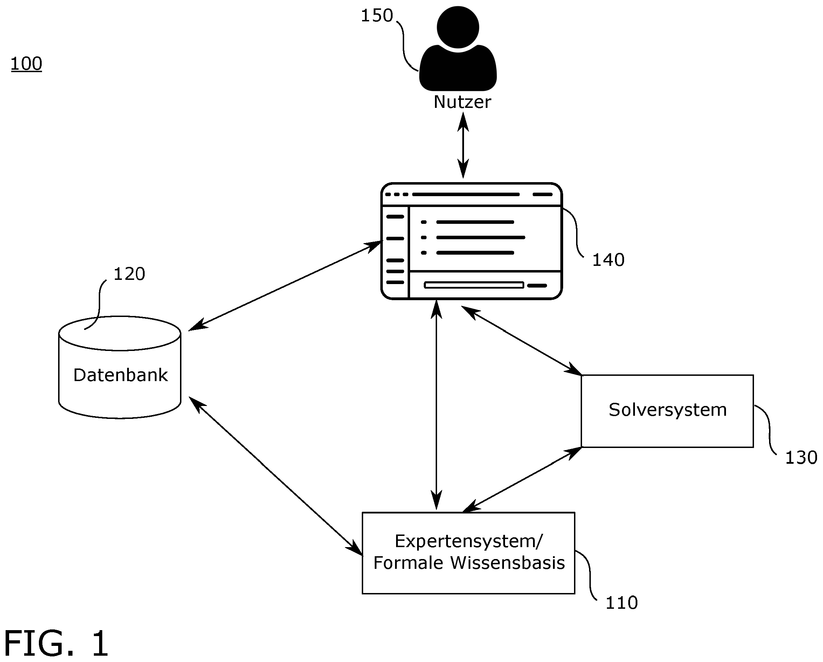

Zur Optimierung der Maschinenlinien- / Maschinen-Beschickungsplanung bzw. Wartungsplanung kann das formale Systemmodell inklusive aktueller Produktionspläne (z.B. aus dem ERP), aktueller Daten aus beschickungsrelevanten und/oder wartungsrelevanten Überwachungssystemen der zu beplanenden Maschinen/Anlagen (Condition Monitoring, Prediction Systemen etc.), den Präferenzen (z.B. Minimale Wechselzeiten, Maximaler OEE, minimaler Verschleiß, minimale Änderung der bestehenden Produktionspläne, etc.) und die Planungsvorgaben (z.B. Planungszeitraum, Teilfestlegungen im Beschickungsplan sowie maschinen- kunden- oder anlagenspezifischer Einplanungsregeln usw.) in eine deklarative Logiksprache übersetzt werden, die von einem wissensbasierten KI-System (Expertensystem) als Anfrage bearbeitet werden kann. Das Expertensystem besitzt ein eigenes internes deklaratives formallogisches Wissensmodell über die Bedeutung der Anfrage und der übermittelten Systemzusammenhänge. Zur Ermittlung der optimalen Beantwortung der Anfrage kann wie unten beschrieben vorgegangen werden. Zur Veranschaulichung sind in Figur 1 beispielhafte Elemente des zugrundeliegenden Systems 100 gezeigt.

In einem ersten Schritt kann ein Nutzer 150 Planungsdaten für die Beschickungsplanung und/oder die Wartungsplanung mittels einer Eingabeschnittstelle 140 in das System eingeben. Das System 100 umfasst dabei eine Computervorrichtung, die mit einer speziellen Software und Hardware ausgestattet ist. Die Eingabeschnittstelle 140 kann beispielsweise eine grafischen Bedienoberfläche sein. Dabei kann die Eingabeschnittstelle 140 eine grafische Bedienoberfläche mit einer Abfrage- und Eingabemaske umfassen, mittels derer ein Benutzer durch einen Abfrageprozess zu Präferenzen und/oder weiteren relevanten Daten geführt wird.

Der Nutzer 150 kann über die Eingabeschnittstelle 140 Planungsdaten für Wartung und/oder Bestückung der Maschinenlinie, Produktionsplanungsdaten, und eine oder mehrerer Präferenzen in das System eingeben. Präferenzen gemäß Ausführungsformen sind durch einen Benutzer festgelegte Randbedingungen für die Planung für Wartung und/oder Bestückung. Der Nutzer 150 kann die Daten direkt mittels der Eingabeschnittstelle 140 eingeben, z.B. mittels Tastatur oder ähnlicher Eingabeeinheiten. Der Nutzer 150 kann aber auch mittels der Eingabeschnittstelle 140 auf eine Datenbank 120 zugreifen, in der wenigstens ein Teil der erforderlichen Daten bereits abgelegt ist.

Beispielsweise kann das System 100 zur Unterstützung für den Eingabevorgang über entsprechende Schnittstellen zum Produktionsplanungssystem des Nutzers 150 (z.B. ERP / MES System) und zu Überwachungssystemen der Anlage/Maschinen (u.a. zum vorhandenen Stand der Verbrauchsmaterialien in der Anlage / den Maschinen sowie die voraussichtliche Reichweiten) verfügen, was zusammenfassend als Zugriff auf die Datenbank 120 in Figur 1 gezeigt ist.

Nach vollständiger Eingabe/Auswahl der relevanten Daten aus dem Produktionsplanungssystem (u.a. Produktionsplan im Beschickungsplanungszeitraum), der Präferenzen und der Planungsvorgaben, kann in einem zweiten Schritt ein formales Systemmodell für die Maschinenlinie erfasst werden. Das formale Systemmodell beschreibt beispielsweise Wirkzusammenhänge von Daten-, Energie-, und/oder Materialströmen in der Maschinenlinie. Das formale Systemmodell kann beispielsweise von einem KI-System, wie etwa dem Expertensystem 110 basierend auf Daten aus der Datenbank 120 erzeugt werden. Das formale Systemmodell kann dann zusammen mit den Planungsdaten für Wartung und/oder Bestückung, den Produktionsplanungsdaten und der einen oder der mehreren Präferenzen an das Künstliches-Intelligenz- (KI-) System (Expertensystem 110) übergeben werden.

Das KI-System oder Expertensystem 110 spannt daraufhin einen Lösungsraums mit einer Vielzahl von möglichen Wartungs- und/oder Bestückungsoptionen auf. Der Lösungsraum für alle mögliche Handlungen kann dabei automatisch unter Berücksichtigung von relevanten Produktionsplanungsdaten (z.B. aus dem ERP), der Daten von Überwachungssystemen der Anlage/Maschinen, der Präferenzen, der Planungsvorgaben und eines internen deklarativen formallogischen Wissensmodell des Expertensystems 110 aufgespannt werden. Dabei werden alle möglichen Handlungsoptionen durch einen sogenannten Grounder gegründet. Dabei kann als Ergebnis ein variablenfreies Logikprogramm erzeugt werden. Wenn es notwendig ist, Informationen innerhalb des Systems weiterzugeben (beispielsweise um Änderungen oder Einschränkungen auf andere Komponenten oder Maschinen zu übertragen), erfolgt diese sogenannte Propagation entweder parallel in mehreren Systemmodulen, nacheinander in einer festgelegten Reihenfolge oder direkt im Zuge des Groundings, also während der Aufbereitung und Konkretisierung möglicher Handlungsmöglichkeiten.

Anschließend wird der Lösungsraum nach einer optimierten Wartungs- und/oder Bestückungsplanung basierend auf der einen oder den mehreren Präferenzen durchsucht und ein Plan für die Wartung und/oder Bestückung der Maschinenlinie kann ausgegeben werden.

Der von einem Solversystem 130 ausgegebene Verhaltensplan kann dann in ein Format (zurück-) übersetzt werden, das zur Anlagen-/Systemsteuerung verwendet werden kann. Beispielsweise kann dies in Form von Steuerparametern erfolgen, die direkt durch das Steuersystem implementiert werden können. Die Anlagenbeschickung (z.B. per AGV) kann ebenfalls automatisch durch die ausgegebenen Parameter gesteuert werden. Dies kann beispielsweise ein optimaler Plan mit Routing je AGV für die Beschickung zum optimalen Zeitpunkt sein. Alternativ oder zusätzlich kann der ausgegebene Plan dem Anlagenpersonal die genauen Beschickungszeiten in Form eines Zeitplans je Material und Abhol- sowie Zielstandorte übergreifend für die Linie ausgeben.

Der Nutzer 150 kann den ausgegebenen Plan jedoch auch verwerfen bzw. nicht übernehmen, z.B. wegen Fehleingaben oder neuen Präferenzen für eine Neuplanung. Dann beginnt dieser Prozess von neuem.

Bei ungeplanten Ereignissen, z.B. AGV-Ausfall, kann das System 100 auf Basis des aktuellen Abarbeitungsstands des Beschickungsplans und/oder des Wartungsplans und dem ungeplanten neuen Zustand in der Anlage versuchen, reaktiv neu zu planen. Dabei kann der letzte Zustand der Maschinenlinie und des Beschickungsplans oder des Wartungsplans mit dem zuvor aufgespannten Lösungsraum verglichen werden. Die Planungsdaten können dabei um die neuen Fakten (z.B. AGV ausgefallen; eine Route ist für 2Std. blockiert) für eine Plananpassung als Eingabe in der Eingabeschnittstelle 140 verwendet werden.

Für die Umsetzung des Systems 100 kann das Expertensystem 110 speziell auf die konkrete Produktgestaltung inklusive notwendiger Standardoptimierungsziele, Standardfeatures und Standardbenutzerinterface abgestimmt werden. Die formelle Wissensbasis des Expertensystems 110 wird dabei in Kombination mit dem KI-Planungssystem (z.B. Grounder und Solver für Answer Set Programming, Constraint Solver, SMT oder SAT Solver) zur Abbildung weiterer formaler Regeln/Präferenzen und Performance-Optimierung angepasst und erweitert. Das Expertensystem 110 ist dabei auch um die Spezifikationen der Beschickungsabhängigkeiten und der Wartungsabhängigkeiten für die einzelnen Maschinen in der Maschinenlinie erweitert, für die eine automatische Planung angeboten wird. Zusätzlich können Integrationsschichten in ERP-, MES- und Überwachungs-Systeme erstellt werden, z.B. als APIs, so dass das Expertensystem 110 in ein Cloud-System integriert werden kann. Durch eine Online-Verbindung der Maschinenlinie mit dem Expertensystem 110 in der Cloud oder Installation des Expertensystems 110 auf Anlagenebene beim Benutzer 150 vor Ort kann die Optimierung der Anlagenbeschickungsplanung und der Wartungsplanung automatisch gemäß dem beschriebenen Anwendungsfall umgesetzt werden.

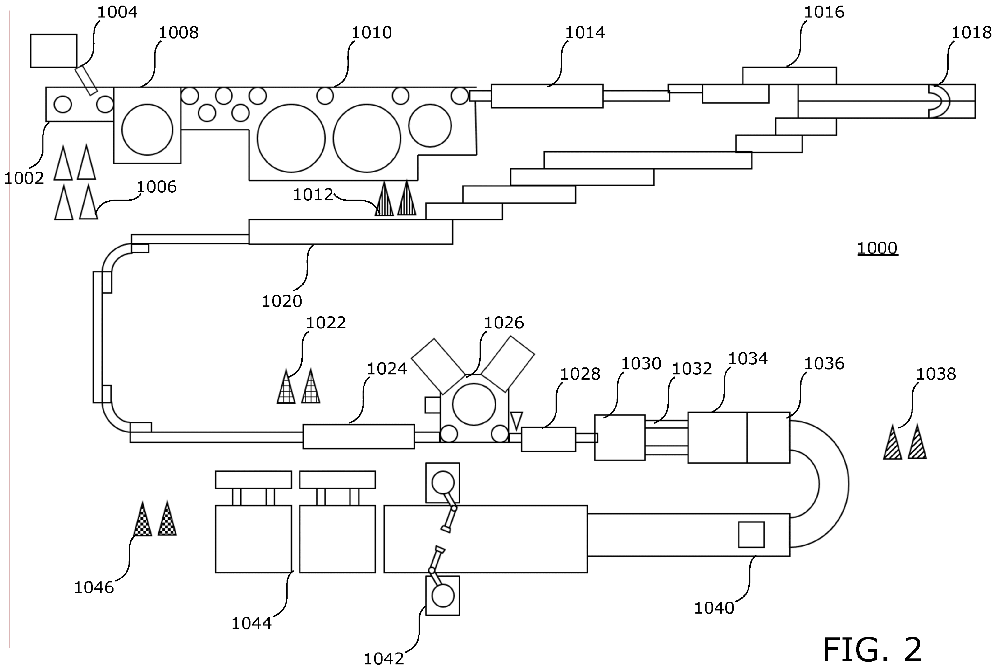

In den folgenden Figuren 2 bis 5 werden verschiedene beispielhafte Anlagenkonfigurationen für verschiedene Flaschenabfüllanlagen beschrieben, in denen die Erfindung oder wenigstens Teile und Aspekte der Erfindung implementiert werden können. Die Beschreibung der Figuren 2 bis 5 soll nur eine allgemeine Übersicht über Maschinen geben, welche von der Überwachung der hierin beschriebenen Ausführungsformen profitieren können.

Figur 2 zeigt eine beispielhafte Anlagenkonfiguration 1000 für PET-Flaschen oder PET-Behälter und Klebegebinde. Wie in Figur 2 zu sehen, umfasst die Anlagenkonfiguration 1000 verschiedenste Module, die eine Linie bilden, an deren Ende fertig abgefüllte PET-Behälter in Form eines Gebindes auf Paletten ausgegeben werden. Einige der Module und Maschinen können dabei optional sein und die Erfindung ist nicht auf die genaue Form und Anordnung der Anlagenkonfigurationen beschränkt.

Die Anlagenkonfiguration 1000 umfasst einen Ofen 1002 für Preforms, eine Preform-Sortierung mit Zuführmaschine 1004 und eine Blasmaschine 1008. Die Module 1002, 1004 und 1008 bilden im Allgemeinen eine Streckblasmaschine, in welcher PET-Behälter aus einem Ausgangsmaterial hergestellt und geformt werden. Die hergestellten PET-Behälter werden weitergeleitet in einen Füller 1010, in dem die Flaschen befüllt werden. Der Füller kann optional einen Rinser umfassen. In den Preforms können sich während der Lagerung oder des Transports verschiedene Partikel wie Staub, Pappe oder Reste von Holzpaletten ablagern. Mit dem Rinser lassen sich diese entfernen. Am Ende des Füllers kann ein Verschließer angeordnet sein, mittels welchem die PET-Behälter nach der Befüllung verschlossen werden.

Optional kann die Anlagenkonfiguration 1000 nach dem Füller 1010 eine Drehvorrichtung umfassen, die bei Heißabfüllung der PET-Behälter zum Einsatz kommt. Über ein oder mehrere Transportbänder 1016, die auch einen Puffer 1018 zum Zwischenladen von befüllten Behältern umfassen können werden die befüllten PET-Behälter zu einem Vereinzeler 1020 und weiter zu einer Trocknungsvorrichtung 1024 geleitet, in welcher die PET-Behälter getrocknet werden.

Nach erfolgter Trocknung werden die PET-Behälter in eine Etikettiermaschine 1026 befördert. Die Etikettiermaschine 1026 kann für verschiedene Etikettiertechniken ausgelegt sein, wie beispielsweise eine Etikettierung mittels Heißleim, Kaltleim, Selbstklebe-Etiketten oder Sleeves. Nach dem Bedrucken oder Etikettieren der PET-Behälter, werden die PET-Behälter durch eine zweite Trocknungsvorrichtung 1028, einen Linienverteiler 1030, Transportbänder 1032, eine Klebegebindeherstellung 1034 und eine Aushärtstrecke zu einem Handle-Applikator geleitet. In der Klebegebindeherstellung 1034 werden die PET-Behälter in bestimmte Gruppengrößen zusammen gruppiert und zu einem Gebinde, wie beispielsweise einem "Sixpack" verpackt. In dem Handle-Applikator wird ein Tragegriff an das Gebinde angebracht, was ein komfortables Tragen des Gebindes ermöglicht. Die fertigen Gebinde werden dann von einem Roboter 1042 zur Lagenherstellung entsprechend angeordnet und von einem Palettierer 1044 auf Paletten verpackt.

In der Anlagenkonfiguration 1000 können an verschiedenen Modulen und Maschinen sogenannte Formatwagen oder Formatregale angeordnet sein, um schnell wechselbare Formatsätze für kurze Umstellzeiten und automatischen Werkzeugwechsel zur Verfügung zu stellen. Beispiele für Formatwagen sind der Formatwagen 1006 für die Blasmaschine 1008, der Formatwagen 1012 für den Füller 1010, der Formatwagen 1022 für die Etikettiermaschine 1026, der Formatwagen 1038 für die Klebegebindeherstellung 1034 und der Formatwagen 1046 für den Palettierer 1044.

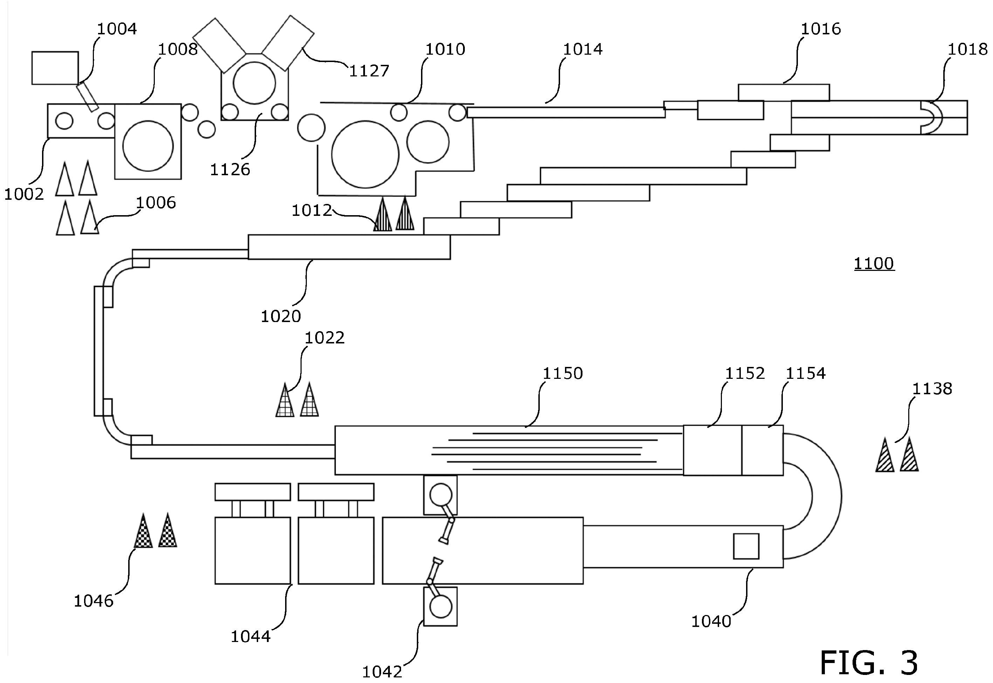

Figur 3 zeigt eine weitere beispielhafte Anlagenkonfiguration 1100 für PET-Behälter und Schrumpfpacker. Die Anlage 1100 aus Figur 3 umfasst viele der Module und Maschinen aus der Anlagenkonfiguration 1000 aus Figur 2, jedoch gibt es einige Unterschiede. Auf die Beschreibung der Module, die bereits in Zusammenhang mit Figur 2 beschrieben sind, wird daher für Figur 3 verzichtet.

Ein wesentlicher Unterschied zwischen den beiden beispielhaften Anlagenkonfigurationen 1000 und 1100 besteht darin, dass die Etikettiermaschine 1126 mit den Etikettiermodulen 1127 bereits nach der Blasmaschine 1008 und vor dem Füller 1008 installiert sein kann. Dafür kann die Anlagenkonfiguration 1100 gleich sechs Transportspuren 1150 umfassen, in die sich die PET-Behälter eindrängeln können. Nachdem die PET-Behälter sich entsprechend in eine der sechs Spuren 1150 eingedrängelt haben, werden sie in das Folieneinschlagmodul 1152 und anschließend in den Schrumpftunnel 1154 befördert.

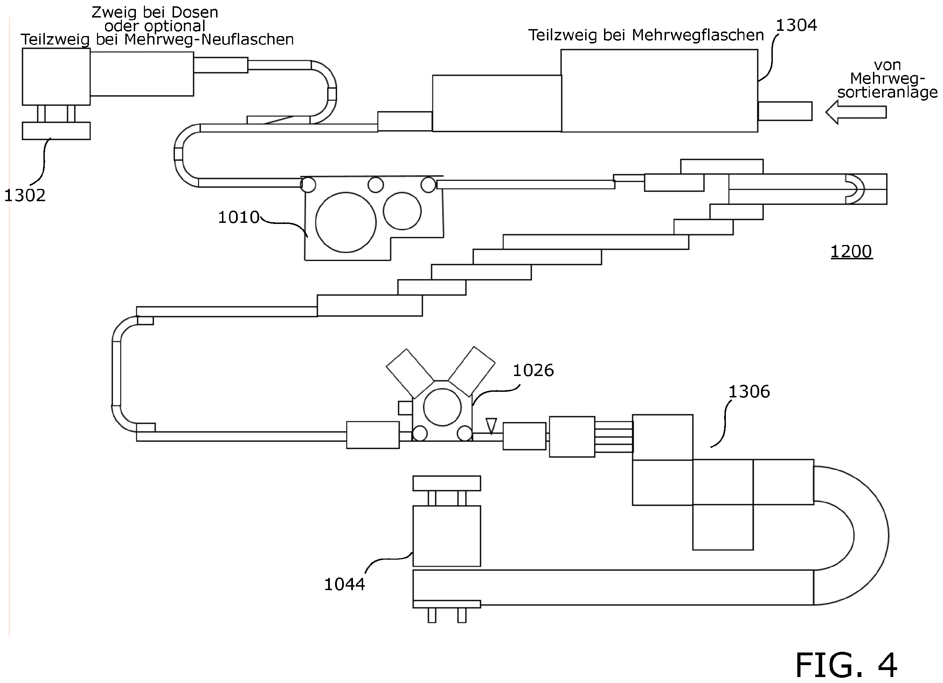

Figur 4 zeigt eine beispielhafte Anlagenkonfiguration 1200 für Dosen oder Glasflaschen. Die beispielhafte Anlagenkonfiguration 1200 aus Figur 4 hat wieder einige Ähnlichkeiten zu den Anlagenkonfigurationen 1000 und 1100 aus Figuren 2 und 3 und die Beschreibung der Anlagenkonfiguration beschränkt sich daher auf die Unterschiede der Anlagenkonfigurationen.

Wie in Figur 4 gezeigt, kann die beispielhafte Anlagenkonfiguration zwei separate Zuführungen umfassen. Eine erste Zufuhr, links in Figur 4, zeigt einen Zweig bei Dosen oder optional einen Teilzweig bei Mehrweg-Neuflaschen. Dabei werden die Behälter, d.h. Dosen oder neue Flaschen, von einem Depalettierer 1302 in die Maschine geführt, wo sie über Transportbänder zu dem Füller 1010 geführt werden. Eine zweite Zufuhr, rechts in Figur 4, zeigt einen Teilzweig bei Mehrwegflaschen, die von einer Mehrwegsortieranlage (nicht abgebildet) in die Anlage eingeleitet werden.

In dem Fall, dass die bereits benutzten Mehrwegflaschen über den Teilzweig bei Mehrwegflaschen in die Anlage 1200 eingeleitet werden, durchlaufen die Mehrwegflaschen zunächst die Reinigungsmaschine oder Waschmaschine 1304. Ein weiterer möglicher Unterschied der beispielhaften Anlagenkonfiguration 1200 ist der Umsetzpacker 1306 nach der Etikettiermaschine 1026. Der Umsetzpacker kann die Flaschen oder Dosen in eine Karton-Clip-Aufbringung oder in Kästen oder beides einsortieren.

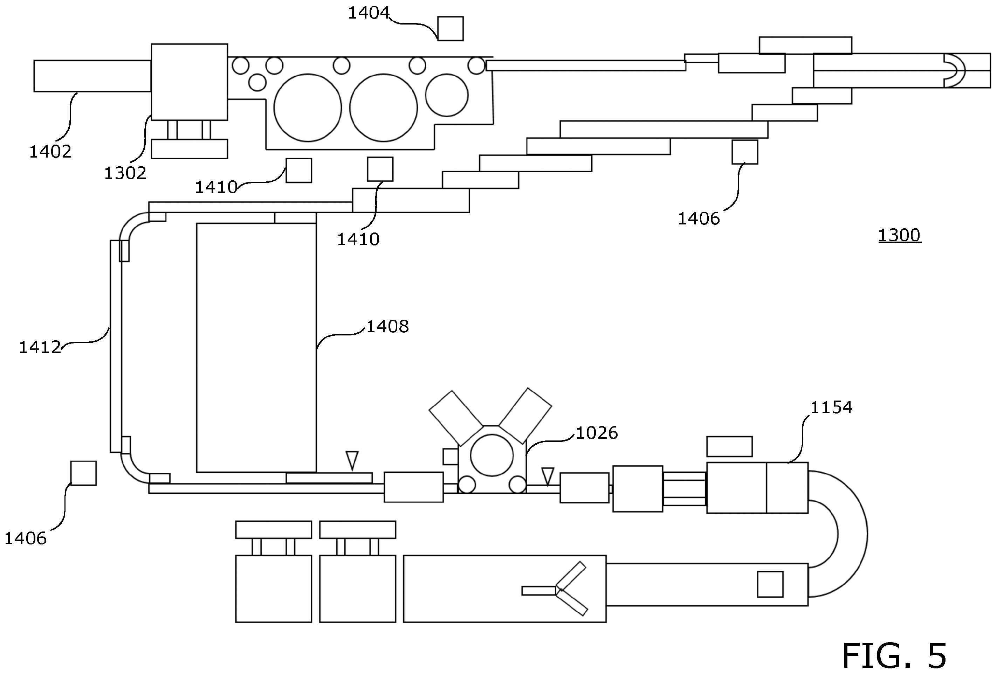

Figur 5 zeigt eine beispielhafte Anlagenkonfiguration 1300 für Dosen, in der wieder die bereits in den anderen Anlagenkonfigurationen beschriebene Elemente nicht mehr beschrieben werden. Die Dosen in der Anlagenkonfiguration 1300 werden von einem Magazin 1402 mit Dosen in den Depalettierer 1302 eingeleitet. Die Dosen werden, nachdem sie den Füller durchlaufen haben und gefüllt sind mittels Verschlussmagazin 1404 verschlossen und über die Transportbänder, wie oben beschrieben, weiter entlang der Anlage 1400 geleitet.

Der optionale Pasteur 1408 kann über den Bypass 1412 umgangen werden, falls dieser nicht benötigt wird. Im Pasteur 1408 können die frisch abgefüllten Produkte für die Konservierung pasteurisiert werden.

Im Gegensatz zu den Anlagenkonfigurationen 1000, 1100 und 1200 sind in der beispielhaften Anlagenkonfiguration 1300 verschiedene Tanks für entsprechende Verbrauchsgüter gezeigt, wie die Tanks 1410 mit Rinsflüssigkeit und/oder dem Abfüllprodukt und den Tanks 1406 mit Bandschmiermittel. Diese Tanks können auch in den bereits oben beschriebenen beispielhaften Anlagenkonfigurationen enthalten sein. In die Tanks 1406 und 1410 können beispielsweise die chemischen Produkte 106, die aus dem Mischer 110 zu den Maschinen geleitet wird, gespeichert werden.

## Patentansprüche

1. Computerimplementiertes Verfahren zur Optimierung von Wartungs- und/oder Bestückungsplanung in einer Maschinenlinie, insbesondere einer Maschinenlinie zum Abfüllen und Verpacken von Lebensmitteln und/oder Getränken, wobei das Verfahren umfasst:
Bereitstellen einer Eingabeschnittstelle zum Eingeben von:
Planungsdaten für Wartung und/oder Bestückung der Maschinenlinie, Produktionsplanungsdaten, und
einer oder mehrerer Präferenzen, wobei die Präferenzen durch einen Benutzer festgelegte Randbedingungen in der Planung für Wartung und/oder Bestückung beschreiben;
Erfassen eines formalen Systemmodells für die Maschinenlinie, wobei das formale Systemmodell Wirkzusammenhänge von Daten-, Energie-, und/oder Materialströmen in der Maschinenlinie beschreibt;
Eingeben des formalen Systemmodells zusammen mit den Planungsdaten für Wartung und/oder Bestückung, den Produktionsplanungsdaten und der einen oder der mehreren Präferenzen an ein Künstliches-Intelligenz- (KI-) System;
Aufspannen, durch das KI-System, eines Lösungsraums mit einer Vielzahl von möglichen Wartungs- und/oder Bestückungsoptionen;
Durchsuchen des Lösungsraums nach einer optimierten Wartungs- und/oder Bestückungsplanung basierend auf der einen oder den mehreren Präferenzen; und
Ausgeben eines Plans für die Wartung und/oder Bestückung der Maschinenlinie.

2. Computerimplementiertes Verfahren nach Anspruch 1, wobei das Aufspannen des Lösungsraums umfasst:
Gründen, durch einen Grounder, aller möglichen Handlungsoptionen für die Wartung und/oder Bestückung der Maschinenlinie basierend auf:
relevanten Produktionsplanungsdaten, insbesondere von Produktionsplanungsdaten aus einem Enterprise-Resource-Planning-, ERP-, System,
Daten von Überwachungssystemen der Maschinenlinie,
der einen oder der mehreren Präferenzen,
einem internen deklarativen formallogischen Wissensmodell eines Expertensystems; und
Erzeugen eines variablenfreien Logikprogramms, wobei das Durchsuchen des Lösungsraums nach der optimierten Produktsequenzierung ein Durchsuchen, mittels eines Solvers, des variablenfreien Logikprogramms umfasst.

3. Computerimplementiertes Verfahren nach Anspruch 1 oder 2, des Weiteren umfassend:
Übersetzen des ausgegebenen Plans in Steuerparameter, die zur Steuerung der Maschinenlinie angepasst sind; und
Übernehmen der ausgegebenen Steuerparameter.

4. Computerimplementiertes Verfahren nach einem der Ansprüche 1 bis 3, wobei:
Präferenzen umfassen:
minimale Wechselzeiten, Maximaler OEE, minimale Ausschussrate, minimaler Verschleiß, und/oder minimale Änderung der bestehenden Produktionspläne,
Planungsdaten für Wartung und/oder Bestückung umfassen:
einen Planungszeitraum, Teilfestlegungen im Wartungsplan, Teilfestlegungen im Beschickungsplan, und/oder maschinen-, kunden-, und/oder anlagenspezifische Einplanungsregeln.

5. Verfahren nach einem der Ansprüche 1 bis 4, wobei die Wirkzusammenhänge und Abhängigkeiten in Form einer Produktwechselmatrix formalisiert sind.

6. Verfahren nach einem der Ansprüche 1 bis 5, wobei das formale Systemmodell eine semantische und formale Erweiterung eines digitalen Konstruktionsmodells der Maschinenlinie ist und des Weiteren Abhängigkeiten zu und zwischen Betriebszuständen, Geometrien, Materialien, Prozessen, Funktionen, Kundenanforderungen und/oder Optimierungszielen beschreibt.

7. Computerimplementiertes Verfahren nach einem der Ansprüche 1 bis 6, wobei die Eingabeschnittstelle eine grafische Bedienoberfläche mit einer Abfrage- und Eingabemaske umfasst, mittels derer ein Benutzer durch einen Abfrageprozess zu Präferenzen und/oder weiteren relevanten Daten geführt wird, wobei die durch den Benutzer eingegebenen Daten durch das KI-System bei dem Aufspannen und Durchsuchen des Lösungsraums berücksichtigt werden.

8. System zum Optimieren von Wartungs- und/oder Bestückungsplanung in einer Maschinenlinie, insbesondere einer Maschinenlinie zum Abfüllen und Verpacken von Lebensmitteln und/oder Getränken, wobei das das System umfasst:
die Maschinenlinie;
eine Recheneinheit, umfassend ein Künstliches-Intelligenz- (KI-) System und eine Eingabeschnittstelle, wobei die Recheneinheit angepasst ist zum:
Empfangen, über die Eingabeschnittstelle, von:
Planungsdaten für Wartung und/oder Bestückung der Maschinenlinie, Produktionsplanungsdaten, und
einer oder mehrerer Präferenzen, wobei die Präferenzen durch einen Benutzer festgelegte Randbedingungen in der Planung für Wartung und/oder Bestückung beschreiben;
Erfassen eines formalen Systemmodells für die Maschinenlinie, wobei das formale Systemmodell Wirkzusammenhänge von Daten-, Energie-, und/oder Materialströmen in der Maschinenlinie beschreibt;
Eingeben des formalen Systemmodells zusammen mit den Planungsdaten für Wartung und/oder Bestückung, den Produktionsplanungsdaten und der einen oder der mehreren Präferenzen an das KI-System;
Aufspannen, durch das KI-System, eines Lösungsraums mit einer Vielzahl von möglichen Wartungs- und/oder Bestückungsoptionen;
Durchsuchen des Lösungsraums nach einer optimierten Produktsequenzierung basierend auf der einen oder den mehreren Präferenzen; und
Ausgeben eines Plans für die Wartung und/oder Bestückung der Maschinenlinie.

9. System nach Anspruch 8, wobei das Aufspannen des Lösungsraums mittels dem KI-System umfasst:
Gründen, durch einen Grounder, aller möglichen Handlungsoptionen für die Wartung und/oder Bestückung der Maschinenlinie basierend auf:
relevanten Produktionsplanungsdaten, insbesondere von Produktionsplanungsdaten aus einem Enterprise-Resource-Planning-, ERP-, System,
Daten von Überwachungssystemen der Maschinenlinie,
der einen oder der mehreren Präferenzen,
einem internen deklarativen formallogischen Wissensmodell eines Expertensystems; und
Erzeugen eines variablenfreien Logikprogramms, wobei das Durchsuchen des Lösungsraums nach der optimierten Produktsequenzierung ein Durchsuchen, mittels eines Solvers, des variablenfreien Logikprogramms umfasst.

10. Computerlesbares Speichermedium mit darauf aufgezeichneten Programmanweisungen, die, wenn sie von wenigstens einer Computervorrichtung ausgeführt werden, die wenigstens eine Computervorrichtung konfigurieren zum:
Bereitstellen einer Eingabeschnittstelle zum Eingeben von:
Planungsdaten für Wartung und/oder Bestückung der Maschinenlinie, Produktionsplanungsdaten, und
einer oder mehrerer Präferenzen, wobei die Präferenzen durch einen Benutzer festgelegte Randbedingungen in der Planung für Wartung und/oder Bestückung beschreiben;
Erfassen eines formalen Systemmodells für die Maschinenlinie, wobei das formale Systemmodell Wirkzusammenhänge von Daten-, Energie-, und/oder Materialströmen in der Maschinenlinie beschreibt;
Eingeben des formalen Systemmodells zusammen mit den Planungsdaten für Wartung und/oder Bestückung, den Produktionsplanungsdaten und der einen oder der mehreren Präferenzen an ein Künstliches-Intelligenz- (KI-) System;
Aufspannen, durch das KI-System, eines Lösungsraums mit einer Vielzahl von möglichen Wartungs- und/oder Bestückungsoptionen;
Durchsuchen des Lösungsraums nach einer optimierten Produktsequenzierung basierend auf der einen oder den mehreren Präferenzen; und
Ausgeben eines Plans für die Wartung und/oder Bestückung der Maschinenlinie.
